(19) Europäisches Patentamt
European Patent Office
Office européen des brevets

(11) EP 4 169 968 A1

(12) **EUROPEAN PATENT APPLICATION**
published in accordance with Art. 153(4) EPC

(43) Date of publication:
**26.04.2023 Bulletin 2023/17**

(21) Application number: **21828031.1**

(22) Date of filing: **18.06.2021**

(51) International Patent Classification (IPC):
***C08G 65/48*** *(2006.01)* ***C08K 7/02*** *(2006.01)*
***C08L 81/06*** *(2006.01)* ***C08L 63/00*** *(2006.01)*
***C08J 5/24*** *(2006.01)* ***C08G 75/20*** *(2016.01)*

(52) Cooperative Patent Classification (CPC):
**C08G 65/48; C08G 75/20; C08J 5/24; C08K 7/02; C08L 63/00; C08L 81/06**

(86) International application number:
**PCT/JP2021/023185**

(87) International publication number:
**WO 2021/261391 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.06.2020 JP 2020107881**

(71) Applicant: **SUMITOMO CHEMICAL COMPANY, LIMITED**
**Tokyo 103-6020 (JP)**

(72) Inventor: **ITO Kazuyuki**
**Tsukuba-shi, Ibaraki 300-3294 (JP)**

(74) Representative: **Vossius & Partner**
**Patentanwälte Rechtsanwälte mbB**
**Siebertstraße 3**
**81675 München (DE)**

(54) **RESIN COMPOSITION, CURED OBJECT, PREPREG, METHOD FOR PRODUCING RESIN COMPOSITION, AND AROMATIC POLYSULFONE RESIN**

(57) The present invention relates to a resin composition containing: an epoxy resin; and an aromatic polysulfone resin containing an amino group-containing aromatic polysulfone having an amino group at at least one terminal of a main chain of a polymer chain, in which a number average molecular weight of the aromatic polysulfone resin is 10,000 or less.



Processed by Luminess, 75001 PARIS (FR)

## Description

[Technical Field]

The present invention relates to a resin composition, a cured object, a prepreg, a method for producing a resin composition, and an aromatic polysulfone resin.

Priority is claimed on Japanese Patent Application No. 2020-107881, filed June 23, 2020, the content of which is incorporated herein by reference.

[Background Art]

Aromatic polysulfone is one of amorphous thermoplastic resins and is used for various usages such as components of electronic apparatuses as a material for forming molded products and films due to its excellent heat resistance, mechanical characteristics, and transparency.

Aromatic polysulfone is also used as epoxy resin tougheners. Patent Document 1 discloses a composite resin composition for producing a resin composite body having a pseudo-homogeneous compatible structure, in which the composite resin composition is composed of at least one resin selected from a resin having a photosensitive group and a thermosetting resin, polyethersulfone, and a specific phasic solvent capable of dissolving them together, and examples of the thermosetting resin include an epoxy resin.

[Citation List]

[Patent Document]

[Patent Document 1]
Japanese Patent No. 3160475

[Summary of Invention]

[Technical Problem]

In Patent Document 1, the phasic solvent is used to make the epoxy resin and polyethersulfone compatible. As can be understood from the above, conventionally, the affinity between an epoxy resin and aromatic polysulfone itself was not favorable.

The present invention has been made in view of the above-mentioned circumstances, and an object thereof is to provide a resin composition containing an epoxy resin and an aromatic polysulfone resin having an improved affinity for the above-mentioned epoxy resin, a method for producing a resin composition, and the above-mentioned aromatic polysulfone resin.

Another object of the present invention is to provide a cured object obtained by curing the above-mentioned resin composition, a prepreg, and a cured object obtained by curing the prepreg.

[Solution to Problem]

As a result of intensive studies to achieve the above-mentioned objects, the inventor of the present invention found that an aromatic polysulfone resin, which has a number average molecular weight of 10,000 or less and contains an amino group-containing aromatic polysulfone having an amino group at at least one terminal of a main chain of a polymer chain, has a favorable affinity for epoxy resins, and thereby the present invention was completed.

That is, the present invention has the following aspects.

<1> A resin composition containing: an epoxy resin; and an aromatic polysulfone resin containing an amino group-containing aromatic polysulfone having an amino group at at least one terminal of a main chain of a polymer chain, in which a number average molecular weight of the aromatic polysulfone resin is 10,000 or less.

<2> The resin composition according to <1>, in which the epoxy resin includes a difunctional epoxy resin.

<3> The resin composition according to <1> or <2>, in which the epoxy resin is a bisphenol A type epoxy resin.

<4> The resin composition according to any one of <1> to <3>, in which a content of a solvent is 0 to 5 parts by mass with respect to a total of 100 parts by mass of the epoxy resin and the aromatic polysulfone resin.

<5> The resin composition according to any one of <1> to <4>, in which a content of the aromatic polysulfone resin is 1 to 30 parts by mass with respect to a total of 100 parts by mass of the epoxy resin and the aromatic polysulfone

resin.

<6> The resin composition according to any one of <1> to <5>, in which the resin composition contains 60% by mass or more of the amino group-containing aromatic polysulfone with respect to a total mass of the aromatic polysulfone resin.

<7> The resin composition according to any one of <1> to <6>, in which the resin composition contains 30% to 99% by mass of the epoxy resin, contains 0.5% to 30% by mass of the aromatic polysulfone resin, and contains 0% to 5% by mass of a solvent with respect to a total mass of the resin composition.

<8> The resin composition according to any one of <1> to <7>, in which the amino group-containing aromatic polysulfone has a structural unit represented by General Formula (A).

(A) $-Ph1-SO_2-Ph2-O-$

(where Ph1 and Ph2 are each independently a phenylene group that may have a substituent)

<9> The resin composition according to any one of <1> to <8>, in which the amino group-containing aromatic polysulfone is a compound represented by General Formula (I).

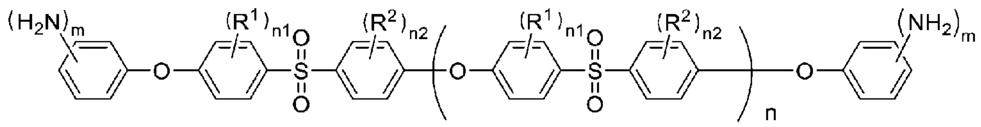

(I)

[In Formula (I),

$R^1$ and $R^2$ each independently represent an alkyl group having 1 to 10 carbon atoms, an aryl group having 6 to 20 carbon atoms, or a halogen atom,

n1 and n2 are each independently an integer of 0 to 4,

when n1 or n2 is 2 or more, a plurality of $R^1$'s and $R^2$'s may be the same as or different from each other,

n is an integer of 0 or more, and

m's are each independently an integer of 1 to 5]

<10> The resin composition according to any one of <1> to <9>, further containing a curing agent.

<11> A cured object which is obtained by curing the resin composition according to <10>.

<12> A prepreg containing: the resin composition according to <10>; and reinforcing fibers.

<13> The prepreg according to <12>, in which the reinforcing fibers are carbon fibers.

<14> A cured object which is obtained by curing the prepreg according to <12> or <13>.

<15> A method for producing a resin composition which is a method for producing the resin composition according to any one of <1> to <10>, the method including mixing an epoxy resin with an aromatic polysulfone resin containing an amino group-containing aromatic polysulfone having an amino group at at least one terminal of a main chain of a polymer chain,

in which a number average molecular weight of the aromatic polysulfone resin is 10,000 or less.

<16> The method for producing a resin composition according to <15>, in which a content of a solvent in the resin composition is 0 to 5 parts by mass with respect to a total of 100 parts by mass of the epoxy resin and the aromatic polysulfone resin.

<17> The method for producing a resin composition according to <15> or <16>, in which the aromatic polysulfone resin is a powder in which D50 measured by a laser diffraction scattering method is 10 μm or more and 80 μm or less.

<18> The method for producing a resin composition according to any one of <15> to <17>, the method further including heating a mixture obtained by mixing the epoxy resin with the aromatic polysulfone resin such that a temperature of the mixture is 50°C to 110°C.

<19> An aromatic polysulfone resin containing an amino group-containing aromatic polysulfone having an amino group at at least one terminal of a main chain of a polymer chain, in which a number average molecular weight of the aromatic polysulfone resin is 10,000 or less.

<20> The aromatic polysulfone resin according to <19>, in which the amino group-containing aromatic polysulfone has a structural unit represented by General Formula (A).

(A) $-Ph1-SO_2-Ph2-O-$

(where Ph1 and Ph2 are each independently a phenylene group that may have a substituent)

<21> The aromatic polysulfone resin according to <19> or <20>, in which the amino group-containing aromatic polysulfone is a compound represented by General Formula (I).

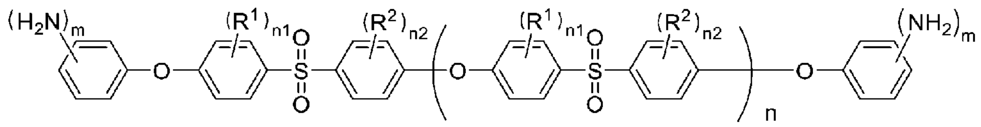

(I)

[In Formula (I),

$R^1$ and $R^2$ each independently represent an alkyl group having 1 to 10 carbon atoms, an aryl group having 6 to 20 carbon atoms, or a halogen atom,
n1 and n2 are each independently an integer of 0 to 4,
when n1 or n2 is 2 or more, a plurality of $R^1$'s and $R^2$'s may be the same as or different from each other,
n is an integer of 0 or more, and
m's are each independently an integer of 1 to 5]

<22> The aromatic polysulfone resin according to any one of <19> to <21>, in which the aromatic polysulfone resin is a powder.
<23> The aromatic polysulfone resin according to <22>, in which the aromatic polysulfone resin is a powder in which D50 measured by a laser diffraction scattering method is 10 μm or more and 80 μm or less.

[Advantageous Effects of Invention]

According to the present invention, a resin composition containing an epoxy resin and an aromatic polysulfone resin having an improved affinity for the above-mentioned epoxy resin, a method for producing a resin composition, and the above-mentioned aromatic polysulfone resin can be provided.
According to the present invention, a cured object obtained by curing the above-mentioned resin composition, a prepreg, and a cured object obtained by curing the prepreg can be further provided.

[Description of Embodiments]

Hereinafter, embodiments of a resin composition, a cured object, a prepreg, a cured object obtained by curing the prepreg, a method for producing a resin composition, and an aromatic polysulfone resin of the present invention will be described.

<<Resin composition»

A resin composition of the embodiment contains: an epoxy resin; and an aromatic polysulfone resin containing an amino group-containing aromatic polysulfone having an amino group at at least one terminal of a main chain of a polymer chain, in which a number average molecular weight of the aromatic polysulfone resin is 10,000 or less.

<Epoxy resin>

An epoxy resin in the present specification means a compound having at least one epoxy group in a molecule.
Examples of the epoxy resin include glycidyl ether type epoxy compounds obtained by reacting epichlorohydrin and polyhydric phenols such as bisphenol A, bisphenol F, bisphenol S, hexahydrobisphenol A, tetramethylbisphenol A, resorcinol, cresol novolac, tetrabromobisphenol A, trihydroxybiphenyl, bisresorcinol, bisphenolhexafluoroacetone, tetramethylbisphenol F, bixylenol, and dihydroxynaphthalene; alicyclic glycidyl ether type epoxy compounds obtained by hydrogenating the above-mentioned glycidyl ether type epoxy compounds; polyglycidyl ether type epoxy compounds obtained by reacting epichlorohydrin and aliphatic polyhydric alcohols such as glycerin, neopentyl glycol, ethylene glycol, propylene glycol, butylene glycol, hexylene glycol, polyethylene glycol, and polypropylene glycol; glycidyl ester type epoxy compounds obtained by reacting epichlorohydrin and hydroxycarboxylic acids such as p-oxybenzoic acid and β-oxynaphthoic acid; polyglycidyl ester type epoxy compounds derived from polycarboxylic acids such as phthalic acid, methylphthalic acid, isophthalic acid, terephthalic acid, tetrahydrophthalic acid, hexahydrophthalic acid, endomethylenetetrahydrophthalic acid, endomethylenehexahydrophthalic acid, trimellitic acid, and polymerized fatty acids; glycidylaminoglycidyl ether type epoxy compounds derived from aminophenol, aminoalkylphenol, and the like; glycidylaminoglycidyl ester type epoxy compounds derived from aminobenzoic acid; and flexible epoxy resins having a skeleton of polyether, polyurethane, polycarbonate, polyester, polyacryl, silicone, or the like.

For the epoxy resin, one type may be used, or two or more types may be used in combination.

The number of epoxy groups per molecule of the epoxy resin is not particularly limited, and a compound having two epoxy groups in a molecule (difunctional epoxy resin) may be incorporated, or a compound having three or more epoxy groups in a molecule (polyfunctional epoxy resin) may be incorporated.

The epoxy resin of the embodiment is preferably a difunctional epoxy resin from the viewpoint that the affinity for aromatic polysulfone tends to be low and an effect of improving the affinity of the aromatic polysulfone resin of the embodiment for the epoxy resin is more easily exhibited. Among difunctional epoxy resins, difunctional glycidyl ether type epoxy compounds are more preferable, and bisphenol A type epoxy resins are particularly preferable.

The content of the above-mentioned difunctional epoxy resin with respect to the total mass of the above-mentioned epoxy resin is preferably 60% by mass or more, more preferably 70% by mass or more and 100% by mass or less, further preferably 80% by mass or more and 100% by mass or less, still further preferably 90% by mass or more and 100% by mass or less, and particularly preferably 95% by mass or more and 100% by mass or less.

The epoxy resin is preferably a liquid epoxy resin. The liquid epoxy resin refers to an epoxy resin that is in a liquid state at 50°C (normal pressure, that is, 1 atm 1013.25 hPa).

The content of the epoxy resin in the resin composition of the embodiment with respect to a total of 100 parts by mass of the epoxy resin and the aromatic polysulfone resin is preferably 30 to 99 parts by mass, more preferably 50 to 98 parts by mass, further preferably 70 to 96 parts by mass, and particularly preferably 85 to 95 parts by mass.

<Aromatic polysulfone resin>

The aromatic polysulfone resin of the embodiment contains an amino group-containing aromatic polysulfone having an amino group at at least one terminal of a main chain of a polymer chain, and has a number average molecular weight of 10,000 or less.

Examples of the aromatic polysulfone include polymers having a structural unit having at least a structure in which a sulfonyl group ($-SO_2-$), an arylene group (-Ar-), and an ether bond (-O-) are bonded in this order.

Examples of the amino group-containing aromatic polysulfone of the embodiment include a polymer having an amino group at at least one terminal of a main chain of a polymer chain, and having a structural unit having at least a structure in which a sulfonyl group ($-SO_2-$), an arylene group (-Ar-), and an ether bond (-O-) are bonded in this order.

The above-mentioned amino group-containing aromatic polysulfone preferably has a structural unit represented by General Formula (A), and more preferably has two or more structural units represented by General Formula (A) in the main chain.

(A) $-Ph1-SO_2-Ph2-O-$

(where Ph1 and Ph2 are each independently a phenylene group that may have a substituent)

Examples of substituents on the above-mentioned phenylene groups as Ph1 and Ph2 include alkyl groups having 1 to 10 carbon atoms, aryl groups having 6 to 20 carbon atoms, and halogen atoms.

As the above-mentioned structural unit represented by General Formula (A), a structural unit represented by General Formula (1) is preferable from the viewpoint of durability and chemical resistance.

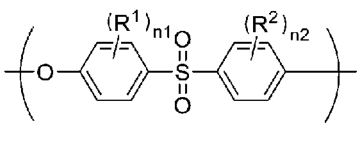

(1)

[In Formula (1),

$R^1$ and $R^2$ each independently represent an alkyl group having 1 to 10 carbon atoms, an aryl group having 6 to 20 carbon atoms, or a halogen atom,
n1 and n2 are each independently an integer of 0 to 4, and
when n1 or n2 is 2 or more, a plurality of $R^1$'s and $R^2$'s may be the same as or different from each other]

Examples of the above-mentioned alkyl groups having 1 to 10 carbon atoms in Ph1 and Ph2 and as $R^1$ and $R^2$ include a methyl group, an ethyl group, an n-propyl group, an isopropyl group, an n-butyl group, an isobutyl group, a s-butyl group, a t-butyl group, an n-hexyl group, a 2-ethylhexyl group, an n-octyl group, and an n-decyl group.

Examples of the above-mentioned aryl group having 6 to 20 carbon atoms as $R^1$ and $R^2$ include a phenyl group,

an o-tolyl group, an m-tolyl group, a p-tolyl group, a 1-naphthyl group, and a 2-naphthyl group.

Examples of the above-mentioned halogen atom as $R^1$ and $R^2$ include a fluorine atom, a chlorine atom, a bromine atom, and an iodine atom.

n1 and n2 are each independently an integer of 0 to 4, preferably 0 to 2, and more preferably 0 to 1.

The amino group-containing aromatic polysulfone of the embodiment has an amino group at at least one terminal of a main chain of a polymer chain. By having an amino group, the affinity of the amino group-containing aromatic polysulfone for the epoxy resin becomes favorable.

The affinity for the epoxy resin refers to a property of capable of being homogeneously mixed with the epoxy resin, and a state in which the affinity for the epoxy resin is improved refers to a state of homogenization described above is improved. Examples of the affinity for the epoxy resin include a property of being dissolved in the epoxy resin when mixed with the epoxy resin, a property of being compatible with the epoxy resin when mixed with the epoxy resin, and a property of being homogeneously dispersed in the epoxy resin when mixed with the epoxy resin.

In the resin composition of the embodiment, the above-mentioned amino group-containing aromatic polysulfone may be in a state of being dissolved in the above-mentioned epoxy resin, a state of being compatibilized with the above-mentioned epoxy resin, or a state of being dispersed in the above-mentioned epoxy resin.

The state in which the affinity of the above-mentioned amino group-containing aromatic polysulfone for the epoxy resin has been improved can be confirmed when, in a mixture obtained by mixing a liquid epoxy resin with the aromatic polysulfone resin of the embodiment in a powder form, the aromatic polysulfone resin in the powder form cannot be visually recognized by being dissolved or finely dispersed in the epoxy resin or the transparency of the above-mentioned mixture is improved, for example.

From the viewpoint of further improving the affinity for the epoxy resin, the amino group-containing aromatic polysulfone of the embodiment preferably has amino groups at both terminals of the main chain of the polymer chain.

In the aromatic polysulfone resin of the present embodiment, the number of amino groups at the terminal of the main chain of the polymer chain is preferably 4 or more per 100 structural units represented by General Formula (A), more preferably 5 or more, and particularly preferably 6 or more. The upper limit value of the amino group at the terminal of the polymer chain is not particularly limited, and may be 16 or less per 100 structural units represented by General Formula (A), may be 12 or less, or may be 10 or less, for example.

As one aspect, in the aromatic polysulfone resin of the present embodiment, the number of amino groups at the terminal of the polymer chain is preferably 4 or more and 16 or less per 100 structural units represented by General Formula (A), more preferably 5 or more and 12 or less, and particularly preferably 6 or more and 10 or less.

When the amount of amino group terminals per 100 structural units represented by General Formula (A) is equal to or more than the above-mentioned lower limit value, the amount of amino groups increases, which further exhibits the effect of improving the affinity for the epoxy resin.

When the amount of amino group terminals per 100 structural units represented by General Formula (A) is equal to or less than the above-mentioned upper limit value, this is more preferable because then the molecular chain is moderately long, and physical strength is easily obtained.

The number of amino groups at the terminal of the polymer chain of the aromatic polysulfone resin can be measured by an NMR method.

Specifically, the aromatic polysulfone resin is dissolved in a solvent such as deuterated dimethyl sulfoxide, and in $^1$H-NMR measurement, a peak surface area ($1H_{NH2}$) of two protons bonded to carbons adjacent to an aromatic carbon substituted with an amino group, and a peak surface area ($1H_{PES}$) of four protons adjacent to an aromatic carbon originating from the structural unit of the aromatic polysulfone are observed. Based on these peak surface areas, the amount of terminals having an amino group per 100 structural units represented by General Formula (A) can be calculated by the following equation.

$$[\text{Amount of terminals having amino group (groups/100 units)}] = [\text{peak surface area of } 1H_{NH2} \text{ when peak surface area of } 1H_{PES} \text{ is } 100] \times 2$$

With respect to the total amount of all structural units constituting the amino group-containing aromatic polysulfone, the structural unit represented by General Formula (A) may be contained in an amount of 60 mol% or more and 100 mol% or less, is preferably contained in an amount of 70 mol% or more and 100 mol% or less, is more preferably contained in an amount of 80 mol% or more and 100 mol% or less, is further preferably contained in an amount of 90 mol% or more and 100 mol% or less, is particularly preferably contained in an amount of 95 mol% or more and 100 mol% or less, and is extremely preferably contained in an amount of 100 mol%.

The greater the proportion of sulfonyl groups ($-SO_2-$) and the greater the above-mentioned content of the structural units represented by General Formula (A) described as examples, the higher the affinity for the epoxy resin

tends to be.

The amino group-containing aromatic polysulfone of the embodiment is preferably substantially composed of the structural unit represented by General Formula (A) and has an amino group at at least one terminal of the main chain of the polymer chain.

The term "substantially" in the present specification means that a structure resulting from a raw material monomer or a structure resulting from impurities or the like contained in a raw material monomer may be contained in a small amount. The phrase "contained in a small amount" referred to herein means that the above-mentioned structure resulting from impurities or the like is contained in an amount of 0% to 40% by mass, preferably 0% to 30% by mass, more preferably 0% to 20% by mass, further preferably 0% to 10% by mass, and particularly preferably 0% to 5% by mass with respect to the total amount of all structural units constituting the amino group-containing aromatic polysulfone.

In the present embodiment, the above-mentioned amino group-containing aromatic polysulfone has an amino group at at least one terminal of the main chain of the polymer chain. In the structure of the terminal, an amino group ($-NH_2$) may be directly bonded, or an amino group may be bonded via a phenylene group, for example.

When the structural unit represented by General Formula (A) above is the structural unit represented by General Formula (1) above and an amino group is bonded via a phenylene group, examples of the amino group-containing aromatic polysulfone of the embodiment include a compound represented by General Formula (I).

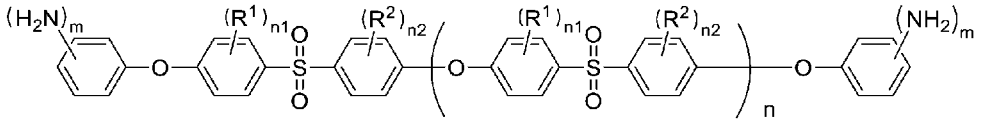

(I)

[In Formula (I),

$R^1$, $R^2$, n1, and n2 have the same meanings as those in General Formula (1) above,
n is an integer of 0 or more, and
m's are each independently an integer of 1 to 5]

n is the repetition number of the above-mentioned structural unit of the amino group-containing aromatic polysulfone represented by General Formula (I) above. Examples thereof include an integer of 0 or more and 2,000 or less, where an integer of 1 or more and 2,000 or less is preferable.

m is the number of amino groups at the terminal of the main chain of the polymer chain of the amino group-containing aromatic polysulfone represented by General Formula (I) above, and is an integer of 1 to 5, preferably an integer of 1 to 3, and more preferably 1.

At benzene rings at both terminals in General Formula (I) above, the amino groups are preferably bonded to the meta-position or para-position of benzene having an ether bond, and are more preferably bonded to the para-position.

As the amino group-containing aromatic polysulfone represented by General Formula (I) above, a compound represented by Formula (1-1) is preferable.

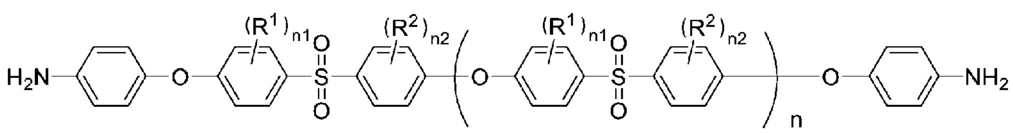

(I − 1)

[In Formula (1-1), $R^1$, $R^2$, n1, n2, and n have the same meanings as those in General Formula (I) above]

As one aspect, the aromatic polysulfone resin of the present embodiment contains the above-mentioned amino group-containing aromatic polysulfone in an amount of preferably 60% by mass or more and 100% by mass or less, more preferably 70% by mass or more and 100% by mass or less, further preferably 80% by mass or more and 100% by mass or less, particularly preferably 90% by mass or more and 100% by mass or less, particularly preferably 95% by mass or more and 100% by mass or less, and extremely preferably 98% by mass or more and 100% by mass or less with respect to the total mass of the aromatic polysulfone resin of the present embodiment, and it is most preferable that the aromatic polysulfone resin of the present embodiment be composed only of the amino group-containing aromatic polysulfone.

Examples of components other than the above-mentioned amino group-containing aromatic polysulfone that may be contained in the aromatic polysulfone resin of the present embodiment include a by-product (for example,

potassium chloride) generated when polymerizing the amino group-containing aromatic polysulfone, and an aromatic polysulfone composed of the structural unit represented by General Formula (A) above and not having an amino group at a polymer chain terminal (for example, an aromatic polysulfone which is composed of the structural unit represented by General Formula (A) above and in which terminal modification with amino groups is incomplete).

That is, as one aspect, the aromatic polysulfone resin of the present embodiment contains the amino group-containing aromatic polysulfone and may further contain at least one component selected from the group consisting of a by-product generated when polymerizing the amino group-containing aromatic polysulfone, and an aromatic polysulfone composed of the structural unit represented by General Formula (A) above and not having an amino group at the terminal of a polymer chain. The content of the above-mentioned amino group-containing aromatic polysulfone with respect to the total mass of the above-mentioned aromatic polysulfone resin is 60% by mass or more and 100% by mass or less, preferably 70% by mass or more and 100% by mass or less, more preferably 80% by mass or more and 100% by mass or less, further preferably 90% by mass or more and 100% by mass or less, particularly preferably 95% by mass or more and 100% by mass or less, and extremely preferably 98% by mass or more and 100% by mass or less.

The number average molecular weight of the aromatic polysulfone resin of the embodiment is 10,000 or less, preferably 9,300 or less, preferably 9,000 or less, more preferably 8,000 or less, and further preferably 7,000 or less.

When the number average molecular weight of the aromatic polysulfone resin of the embodiment is equal to or less than the above-mentioned upper limit value, the affinity for the epoxy resin is favorable. In addition, the smaller the number average molecular weight of the aromatic polysulfone resin, the higher the proportion of amino groups contained when compared to the same amount of the aromatic polysulfone resin, by which the above-mentioned effect of improving the affinity for the epoxy resin is more effectively exhibited.

Furthermore, by improving the affinity of the aromatic polysulfone resin for the epoxy resin, the mechanical characteristics of a cured object obtained when the resin composition is formed into the cured object can be improved.

In general, it is thought that a high molecular weight of the aromatic polysulfone resin is advantageous in order to improve the mechanical strength of a cured object. However, in the resin composition of the present embodiment, on the contrary, by setting the number average molecular weight of the aromatic polysulfone resin to the above-mentioned upper limit value or less, the affinity of the aromatic polysulfone resin for the epoxy resin is improved, as a result of which the mechanical strength of the cured object can be increased.

Furthermore, when the number average molecular weight of the aromatic polysulfone resin of the embodiment is equal to or less than the above-mentioned upper limit value, a viscosity increase in the resin composition containing the aromatic polysulfone resin of the embodiment is prevented, by which ease of handling is improved when using the resin composition as a molding material.

The lower limit value of the number average molecular weight of the aromatic polysulfone resin of the embodiment is not particularly limited, but is preferably 3,000 or more, more preferably 4,000 or more, and further preferably 5,000 or more as examples.

The numerical value range of the above-mentioned number average molecular weight of the aromatic polysulfone resin of the embodiment may be 3,000 or more and 10,000 or less, may be 3,000 or more and 9,300 or less, may be 4,000 or more and 9,000 or less, may be 5,000 or more and 8,000 or less, or may be 5,000 or more and 7,000 or less, for example.

In addition, examples of the number average molecular weight of the amino group-containing aromatic polysulfone of the embodiment include numerical values given as the above-mentioned number average molecular weight of the aromatic polysulfone resin. The number average molecular weight of the amino group-containing aromatic polysulfone of the embodiment may be 3,000 or more and 10,000 or less, may be 4,000 or more and 9,000 or less, may be 5,000 or more and 8,000 or less, or may be 5,000 or more and 7,000 or less, for example.

The value of the above-mentioned number average molecular weight can be obtained by a method described in Examples, and the number average absolute molecular weight obtained by gel permeation chromatography (GPC) analysis is adopted.

[Measurement condition]

Sample: 0.002 g of aromatic polysulfone is blended in 1 mL of an N,N-dimethylformamide solution containing 10 mM lithium bromide.

Sample injection volume: 100 μL

Column (stationary phase): two "TSKgel GMHHR-H" columns (7.8 mmφ × 300 mm) manufactured by TOSOH CORPORATION are connected in series.

Column temperature: 40°C

Eluent (mobile phase): N,N-dimethylformamide containing 10 mM lithium bromide

Eluent flow rate: 0.8 mL/min

Detector: a refractive index detector (RI) + a multi-angle light scattering (MALS) photometer

Standard reagent: polystyrene

Molecular weight calculation method: absolute molecular weight is calculated from the multi-angle light scattering (MALS) photometer.

The aromatic polysulfone resin of the embodiment may be provided as a powder.

In the powder of the aromatic polysulfone resin of the embodiment, a 50% cumulative diameter (D50) in a volume-based cumulative particle size distribution curve obtained from a particle size distribution measurement value is preferably 10 μm or more, more preferably 15 μm or more, and further preferably 20 μm or more from the viewpoint of improving the affinity for the epoxy resin. The upper limit value of the above-mentioned 50% cumulative diameter (D50) is preferably 80 μm or less, more preferably 60 μm or less, and further preferably 50 μm or less. The upper limit value and the lower limit value of the 50% cumulative diameter (D50) can be arbitrarily combined. In the present embodiment, the D50 of the powder of the above-mentioned aromatic polysulfone resin is preferably 10 μm or more and 80 μm or less, more preferably 15 μm or more and 60 μm or less, and further preferably 20 μm or more and 50 μm or less.

The cumulative volume particle size of the powder of the aromatic polysulfone resin can be measured by a laser diffraction scattering method. About 100 mg of aromatic polyester particles are dispersed in water. Subsequently, the particle size distribution of the aromatic polyester particles in the obtained dispersion liquid is obtained using a laser diffraction/scattering-type particle size distribution analyzer (for example, "LA-950" manufactured by HORIBA, Ltd.). The D50 is calculated by obtaining a particle size at a cumulative percentage of 50% from a small size side based on the obtained cumulative volume distribution diagram of the particle size distribution of the aromatic polyester particles.

The content of the aromatic polysulfone resin in the resin composition of the embodiment is preferably 1 to 30 parts by mass, more preferably 2 to 20 parts by mass, and further preferably 3 to 15 parts by mass with respect to a total of 100 parts by mass of the epoxy resin and the aromatic polysulfone resin. As one embodiment, from the viewpoint of reducing the viscosity of the resin composition, the content of the aromatic polysulfone resin is preferably 3 to 7 parts by mass with respect to a total of 100 parts by mass of the epoxy resin and the aromatic polysulfone resin. As another embodiment, from the viewpoint of high hardness of the resin composition, the content of the aromatic polysulfone resin is preferably 8 to 13 parts by mass with respect to a total of 100 parts by mass of the epoxy resin and the aromatic polysulfone resin.

The content of the aromatic polysulfone resin in the resin composition of the embodiment is preferably 0.5% to 30% by mass, more preferably 1 % to 25% by mass, and further preferably 1.5% to 20% by mass with respect to the total mass of the resin composition of the embodiment.

<Method for producing aromatic polysulfone resin>

As a method for producing an aromatic polysulfone resin according to one embodiment of the present invention, a method for producing the aromatic polysulfone resin is provided, the method including causing a polycondensation reaction between a halogen terminal and a phenoxy terminal or phenolate terminal by-produced by condensing an aromatic halogenosulfone compound and an amino compound (polycondensation step).

By the production method of the embodiment, the aromatic polysulfone resin of the above-mentioned embodiment can be produced.

The aromatic polysulfone resin produced by the production method of the embodiment may contain an amino group-containing aromatic polysulfone substantially composed of the structural unit represented by General Formula (A) above and having an amino group at at least one terminal of the main chain of the polymer chain. As described above, the aromatic polysulfone resin produced by the production method of the present embodiment preferably contains 60% by mass or more and 100% by mass or less of the amino group-containing aromatic polysulfone with respect to the total mass of the aromatic polysulfone resin, and is preferably composed only of the amino group-containing aromatic polysulfone.

Examples of components other than the amino group-containing aromatic polysulfone that may be contained in the aromatic polysulfone resin produced by the production method of the present embodiment include a by-product (for example, potassium chloride) generated when polymerizing the amino group-containing aromatic polysulfone, and an aromatic polysulfone composed of the structural unit represented by General Formula (A) above and not having an

amino group at a polymer chain terminal (that is, an aromatic polysulfone in which terminal modification with amino groups is incomplete). Therefore, the method for producing an aromatic polysulfone resin of the present embodiment may actually be a method for producing an amino group-containing aromatic polysulfone.

As one aspect, the aromatic polysulfone resin produced by the production method of the present embodiment is an aromatic polysulfone resin which contains an amino group-containing aromatic polysulfone, and

which may further contain at least one component selected from the group consisting of a by-product generated when polymerizing the amino group-containing aromatic polysulfone, and an aromatic polysulfone composed of the structural unit represented by General Formula (A) above and not having an amino group at a polymer chain terminal (that is, an aromatic polysulfone in which terminal modification with amino groups is incomplete),
in which the content of the above-mentioned amino group-containing aromatic polysulfone is 60% by mass or more and 100% by mass or less with respect to the total mass of the above-mentioned aromatic polysulfone resin.

The step of polycondensing a halogen terminal and a phenoxy terminal or phenolate terminal by-produced by condensing an aromatic halogenosulfone compound and an amino compound (hereinafter referred to as "polycondensation step") will be described.

The step of polycondensing (polycondensation reaction) a halogen terminal and a phenoxy terminal or phenolate terminal by-produced by condensing an aromatic halogenosulfone compound and an amino compound is preferably performed using alkali metal salts of carbonic acid as a base, is more preferably performed in an organic solvent that is a polymerization solvent, and is particularly preferably performed in an organic solvent using alkali metal salts of carbonic acid as a base.

The alkali metal salt of carbonic acid may be alkali carbonate which is a normal salt, that is, an alkali metal carbonate, or may be an alkali bicarbonate which is an acidic salt, that is, an alkali hydrogen carbonate or an alkali metal hydrogen carbonate. The alkali metal salt of carbonic acid may also be a mixture of the above-mentioned alkali carbonate and alkali bicarbonate.

As the alkali carbonate, sodium carbonate, potassium carbonate, and the like are preferable.

As the alkali bicarbonate, sodium bicarbonate (also referred to as sodium hydrogen carbonate), potassium bicarbonate (also referred to as potassium hydrogen carbonate), and the like are preferable.

The above-mentioned organic solvent is preferably an organic polar solvent.

Examples of the above-mentioned organic polar solvent include dimethyl sulfoxide, 1-methyl-2-pyrrolidone (sometimes abbreviated as NMP), sulfolane (also referred to as 1,1-dioxothylan), 1,3-dimethyl-2-imidazolidinone, 1,3-diethyl-2-imidazolidinone, dimethyl sulfone, diethyl sulfone, diisopropyl sulfone, and diphenyl sulfone.

In the present embodiment, it is preferable to mix an aromatic halogenosulfone compound and an amino compound such that the molar ratio (amino compound/halogen atom) of the above-mentioned amino compound to a halogen atom at the terminal of the aromatic halogenosulfone compound is 0.3 or more and less than 1.0. The above-mentioned molar ratio is more preferably 0.6 or more and 0.95 or less, more preferably more than 0.7 and 0.9 or less, and particularly preferably 0.75 or more and 0.85 or less. When the amount of the amino compound mixed is within the above-mentioned range, the residual amount of a halogen terminal and a phenoxy terminal or phenolate terminal by-produced is small, which makes it possible to easily control the number average molecular weight of the aromatic polysulfone resin to the above-mentioned range.

Regarding the use amount of the alkali metal salts of carbonic acid, the molar ratio of the alkali metal to the halogen atom at the terminal of the aromatic halogenosulfone compound is preferably 0.9 or more and 1.2 or less, and more preferably 0.95 or more and 1.15 or less. The larger the use amount of the alkali metal salts of carbonic acid, the faster the desired polycondensation proceeds, but when the use amount of the alkali metal salts of carbonic acid is excessive, the amount of the by-produced phenoxy terminal or phenolate terminal increases. Therefore, when the use amount of the alkali metal salts of carbonic acid is within the above-mentioned range, the number average molecular weight of the aromatic polysulfone resin can be easily controlled to the above-mentioned range.

In the method for producing an aromatic polysulfone resin of the present embodiment, in the polycondensation step, an aromatic halogenosulfone compound and an amino compound are dissolved in an organic polar solvent, and alkali metal salts of carbonic acid are added to the obtained solution to polycondense the aromatic halogenosulfone compound and the amino compound. Thereafter, from the reaction mixture obtained in the above-mentioned polycondensation step, unreacted alkali metal salts of carbonic acid, by-produced alkali halides, and the organic polar solvent are removed to obtain an aromatic polysulfone resin.

In the present embodiment, the heating temperature at the time of polycondensation is preferably a temperature higher than 180°C, more preferably 200°C or higher, and further preferably 210°C or higher and 400°C or lower. When the heating temperature at the time of polycondensation is a temperature higher than 180°C, the desired polycondensation proceeds rapidly. Thereby, the degree of polymerization of the obtained aromatic polysulfone resin is increased, which makes it possible to easily control the number average molecular weight of the aromatic polysulfone resin to the above-mentioned range.

Furthermore, in the polycondensation step, after gradually raising the temperature while removing by-produced water to allow the temperature to reach the reflux temperature of the organic polar solvent, the temperature is preferably maintained for 1 hour or longer and 50 hours or shorter, and the temperature is more preferably maintained for 2 hours or longer and 30 hours or shorter. The longer the polycondensation time, the more the desired polycondensation proceeds, by which the degree of polymerization of the obtained aromatic polysulfone is increased. Due to that, the number average molecular weight of the aromatic polysulfone resin can be easily controlled to the above-mentioned range.

From the reaction mixture obtained in the polycondensation step, unreacted alkali metal salts of carbonic acid, by-produced alkali halides, and the organic polar solvent are removed to obtain an aromatic polysulfone resin. The unreacted alkali metal salts of carbonic acid and the by-produced alkali halides may be removed by filtration, extraction, centrifugation, or the like before removing the organic polar solvent. Removal of the organic polar solvent may be performed by distilling off the organic polar solvent, or may be performed by mixing with a poor solvent for aromatic polysulfones to precipitate the aromatic polysulfone and thereby separating by filtration, centrifugation, or the like. It is preferable to mix a poor solvent for aromatic polysulfones which is capable of dissolving the unreacted alkali metal salts of carbonic acid and the by-produced alkali halides to precipitate the aromatic polysulfone, thereby separating by filtration, centrifugation, or the like, because then the unreacted alkali metal salts of carbonic acid, the by-produced alkali halides, and the organic polar solvent can be removed at the same time.

Examples of the poor solvent for aromatic polysulfones include methanol, ethanol, 2-propanol, hexane, heptane, and water, where water is preferable because it is easily removed.

Each material suitably used in the method for producing an aromatic polysulfone resin of the present embodiment will be described.

· Aromatic halogenosulfone compound

Examples of the aromatic halogenosulfone compound according to the present embodiment include the following compound (4).

$$X^1\text{-Ph1-}SO_2\text{-Ph2-(O-Ph3-}SO_2\text{-Ph4)}_n\text{-}X^2 \qquad (4)$$

[In Formula (4), $X^1$ and $X^2$ each independently represent OH or a halogen atom, provided that at least one of $X^1$ and $X^2$ is a halogen atom, and Ph1 and Ph2 are synonymous with Ph1 and Ph2 in General Formula (A) above, and Ph3 and Ph4 are phenylene groups that may have a substituent]

In the compound (4), the description of the phenylene group that may have a substituent represented by Ph3 and Ph4 is the same as the description relating to the phenylene group that may have a substituent in Ph1 and Ph2 described above.

n is the repetition number of structural units of the compound (4), and examples thereof include an integer of 0 or more and 2,000 or less.

Examples of the halogen atom as $X^1$ and $X^2$ include a fluorine atom, a chlorine atom, a bromine atom, and an iodine atom, where a chlorine atom is preferable.

Examples of the compound (4) include bis(4-chlorophenyl)sulfone, 4-chlorophenyl-3',4'-dichlorophenylsulfone, and compounds in which these are polymerized.

Furthermore, the aromatic halogenosulfone compound can be produced by a known method, and for example, commercially available products such as "SUMIKAEXCEL PES3600P" and "SUMIKAEXCEL PES4100P" manufactured by Sumitomo Chemical Co., Ltd. can also be used.

As the above-mentioned compound (4), a compound represented by General Formula (4-1) is preferable from the viewpoint of durability and chemical resistance.

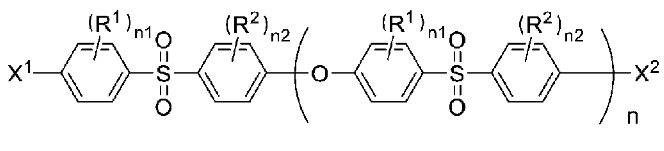
(4－1)

[In Formula (4-1),

$R^1$, $R^2$, n1, n2, and n have the same meanings as those in General Formula (I) above, and
$X^1$ and $X^2$ have the same meanings as those in Formula (4) above]

The number of n in the compound (4) and the number of n in General Formula (I) may be the same as or different from each other.

· Amino compound

Examples of the amino compound according to the present embodiment include 4-aminophenol, 3-aminophenol, 2,4-diaminophenol, 2,5-diaminophenol, 3-aminopropanol, and 4-(2-aminoethyl)phenol, where 4-aminophenol or 3-aminophenol is preferable among them.

As the amino compound according to the present embodiment, from the viewpoint of favorable reactivity and the like, an amino compound having a phenol structure is preferable, and a compound represented by General Formula (5) is preferable.

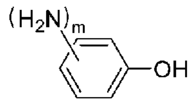

(5)

[In Formula (5), m has the same meaning as that in General Formula (I) above]

Examples of the compound represented by General Formula (5) above include 4-aminophenol, 3-aminophenol, 2,4-diaminophenol, and 2,5-diaminophenol.

Examples of reactions between the aromatic halogenosulfone compound and the amino compound include a reaction between the compound represented by General Formula (4-1) and 4-aminophenol represented by Formula (5-1).

This reaction can be represented by the following reaction formula. By this reaction, an amino group-containing aromatic polysulfone represented by General Formula (I-1) is obtained as an example.

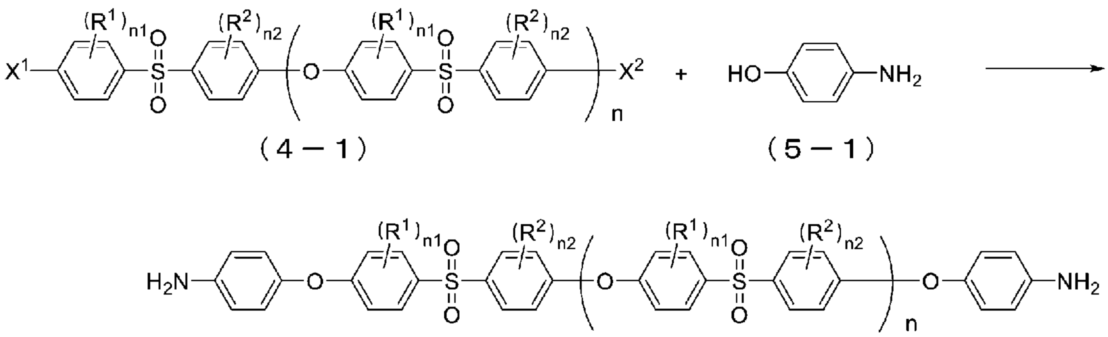

(4－1) (5－1)

(I－1)

<Curing agent>

The resin composition of the present embodiment may further contain a curing agent. The curing agent according to the present embodiment is not particularly limited as long as it is a curing agent for epoxy resins and can react with the above-mentioned epoxy resins. Examples thereof include compounds that are usually used as a curing agent for epoxy resins, where an amine-based curing agent is preferably used. Examples of such curing agent include tetramethylguanidine, imidazole or derivatives thereof, carboxylic acid hydrazides, tertiary amines, aromatic amines, aliphatic amines, and dicyandiamide or derivatives thereof.

As the aromatic amines, diaminodiphenylmethane, and diaminodiphenyl sulfone or derivatives thereof are preferable. For the aromatic amines, one type may be used alone, or two or more types may be used in combination.

In the present specification, a "derivative" is a compound in which a minor portion of the compound has been substituted with another atom or an atomic group without changing the basic structure.

For the curing agent, one type may be used, or two or more types may be used in combination.

The content of the curing agent in the resin composition is preferably 0.5 to 1.5 equivalents with respect to 1 equivalent of the epoxy group of the epoxy resin. When the content is more than 0.5 equivalents, curing of the resin becomes favorable, by which favorable mechanical characteristics are easily exhibited. Furthermore, when the content is less than 1.5 equivalents, unreacted products of the curing agent are less likely to remain, by which favorable mechanical characteristics are easily obtained. The addition amount of the curing catalyst is not particularly limited, but is preferably 0.1 to 5 parts by mass with respect to 100 parts by mass of the epoxy resin.

The content of the curing agent in the resin composition may be appropriately determined depending on the types of the epoxy resin and the curing agent, but may be 10 to 150 parts by mass, may be 15 to 100 parts by mass, or may be 20 to 50 parts by mass with respect to 100 parts by mass of the epoxy resin as examples.

<Other components>

The resin composition of the present embodiment may contain other components that do not correspond to any of the above-mentioned aromatic polysulfone resin, epoxy resin, and curing agent if desired. Examples of the other components include solvents, resins that do not correspond to the aromatic polysulfone resin and the epoxy resin, coloring components, lubricants, various surfactants, antioxidants, heat stabilizers, other various stabilizers, ultraviolet absorbers, and antistatic agents.

The content of the other components is preferably 0% to 10% by mass and more preferably 0% to 5% by mass with respect to the total mass of the resin composition of the present embodiment.

· Solvent

The resin composition of the present embodiment may further contain a solvent, but in a cured object obtained by curing the resin composition containing the aromatic polysulfone resin of the embodiment, the amount of the solvent contained in the resin composition is preferably small from the viewpoint of reducing the residual solvent.

Conventionally, a solvent has been added as one component of a resin composition in order to improve the solubility of aromatic polysulfone in an epoxy resin.

On the other hand, according to the aromatic polysulfone resin of the embodiment, since the affinity of the aromatic polysulfone itself for the epoxy resin is enhanced by incorporating the amino group-containing aromatic polysulfone, the use amount of the solvent required for dissolving, compatibilizing, or dispersing the aromatic polysulfone in the epoxy resin can be reduced. Thereby, the production efficiency of a cured object can be improved, by which the amount of the solvent remaining in the cured object obtained by curing the resin composition is also reduced. This also makes it possible to reduce the occurrence of problems, which are caused by the residual solvent, such as the occurrence of voids at the time of molding.

In the resin composition of the present embodiment, the content of the solvent is preferably 0 to 5 parts by mass and preferably 0 to 1 part by mass with respect to a total of 100 parts by mass of the above-mentioned epoxy resin and the above-mentioned aromatic polysulfone resin, and it is preferable that the solvent be substantially not contained.

The content of the solvent may be 0% to 5% by mass, may be 0% to 1% by mass, or may be 0% to 0.1% by mass with respect to the total mass of the resin composition of the embodiment, and it is preferable that the solvent be substantially not contained.

The solvent may be an organic solvent, and the organic solvent may be a polar solvent or may be an aprotic polar solvent.

For the solvent, it is preferable to use one having the effect of improving the affinity of the aromatic polysulfone resin for the epoxy resin. As such a solvent, Patent Document 1 described above specifies one in which a dipole moment index $\mu$ is within the range of 3.5 to 4.5. Furthermore, examples of solvents in which a dipole moment index $\mu$ is within the range of 3.5 to 4.5 are disclosed in Patent Document 1 described above, the examples including acrylonitrile, 4-methylvaleronitrile, 2-pyrrolidone, nitromethane, propionitride, butyronitride, valeronitrile, triethanolamine, 1-nitropropane, N-methylpropionamide, nitroethane, isobutyronitrile, furfural, succinonitrile, N,N-dimethylacetamide, 2-nitropropane, N-methylformamide, $\varepsilon$-caprolactam, dimethyl sulfoxide, benzonitrile, N-methylpyrrolidone (NMP), $\gamma$-butyrolactone, hexamethylphosphoric acid triamide, and N-methylacetamide.

In addition, examples of the aprotic polar solvent include N-ethylpyrrolidone, N,N-dimethylformamide, 1,3-dimethyl-2-imidazolidinone, and sulfolane.

· Other resins

The resin composition of the present embodiment may further contain other resins that are neither aromatic polysulfone resins nor epoxy resins.

Examples of the other resins include polyamides, polyesters, polyphenylene sulfides, polycarbonates, polyphenylene ethers, aromatic polyketones, polyetherimides, phenolic resins, polyimide resins, and modified products thereof.

The content of the other resins is preferably 0% to 10% by mass, more preferably 0% to 5% by mass, and further preferably 0% to 1 part by mass with respect to the total mass of the resin composition, and the other resins may not be substantially contained.

The resin composition according to one embodiment of the present invention contains the aromatic polysulfone

resin and the epoxy resin, and if desired, the curing agent and at least one component of the other components described above such as the solvent. For example, the above-mentioned resin composition contains the aromatic polysulfone resin, the epoxy resin, the curing agent if desired, and the above-mentioned other components if desired such that the total content (% by mass) does not exceed 100% by mass.

Another aspect includes a resin composition as an example, provided that in the resin composition, as the blending ratio of each of the components in the resin composition of one embodiment,

with respect to the total mass (100% by mass) of the resin composition of the embodiment,
30% to 99% by mass of the epoxy resin is contained,
0.5% to 30% by mass of the aromatic polysulfone resin is contained, and
0% to 5% by mass of the solvent is contained.

Still another aspect includes a resin composition as an example, provided that in the resin composition, with respect to the total mass (100% by mass) of the resin composition of the embodiment,

50% to 98% by mass of the epoxy resin is contained,
1% to 25% by mass of the aromatic polysulfone resin is contained, and
0% to 1 % by mass of the solvent is contained.

Still another aspect includes a resin composition as an example, provided that in the resin composition, with respect to the total mass (100% by mass) of the resin composition of the embodiment,

70% to 96% by mass of the epoxy resin is contained,
1.5% to 20% by mass of the aromatic polysulfone resin is contained, and
the solvent is substantially not contained.

Still another aspect includes a resin composition as an example, provided that in the resin composition, as the blending ratio of each of the components in the resin composition of one embodiment,

with respect to the total mass (100% by mass) of the resin composition of the embodiment,
30% to 96% by mass of the epoxy resin is contained,
0.5% to 30% by mass of the aromatic polysulfone resin is contained,
1% to 60% by mass of the curing agent is contained, and
0% to 5% by mass of the solvent is contained.

Still another aspect includes a resin composition as an example, provided that in the resin composition, with respect to the total mass (100% by mass) of the resin composition of the embodiment,

40% to 90% by mass of the epoxy resin is contained,
1% to 25% by mass of the aromatic polysulfone resin is contained,
5% to 50% by mass of the curing agent is contained, and
0% to 1 % by mass of the solvent is contained.

Still another aspect includes a resin composition as an example, provided that in the resin composition, with respect to the total mass (100% by mass) of the resin composition of the embodiment,

50% to 80% by mass of the epoxy resin is contained,
1.5% to 20% by mass of the aromatic polysulfone resin is contained,
10% to 35% by mass of the curing agent is contained, and
the solvent is substantially not contained.

According to the resin composition of the present embodiment described above, the affinity of the aromatic polysulfone resin itself for the epoxy resin is enhanced when the aromatic polysulfone resin of the embodiment described above contains the amino group-containing aromatic polysulfone, which makes it possible to provide the resin composition having a favorable state of being dissolved in the epoxy resin, compatibilized in the epoxy resin, or dispersed in the epoxy resin.

<<Method for producing resin composition>>

As a method for producing a resin composition of the present embodiment, a method for producing a resin composition is provided, the method including

mixing an epoxy resin with an aromatic polysulfone resin containing an amino group-containing aromatic polysulfone having an amino group at at least one terminal of a main chain of a polymer chain,
in which the number average molecular weight of the above-mentioned aromatic polysulfone resin is 10,000 or less.

The resin composition of the above-mentioned embodiment can be produced by the method for producing a resin composition of the embodiment.
Furthermore, when the resin composition of the embodiment further contains components other than the above-mentioned epoxy resin and aromatic polysulfone resin, a desired resin composition can be obtained by obtaining a mixture in which the above-mentioned curing agent, and each of components described as examples of the other components are blended in addition to the epoxy resin and aromatic polysulfone resin.
Examples of the aromatic polysulfone resin and the epoxy resin in the resin composition produced by the method for producing a resin composition include those described for the resin composition of the above-mentioned embodiment, and detailed description thereof is omitted.
Examples of the curing agent and the other components such as a solvent which may be contained in the resin composition produced by the method for producing a resin composition include those described for the resin composition of the above-mentioned embodiment, and detailed description thereof is omitted.
The content of the solvent in the resin composition produced by the method for producing a resin composition is preferably 0 to 5 parts by mass and preferably 0 to 1 part by mass with respect to a total of 100 parts by mass of the above-mentioned epoxy resin and the above-mentioned aromatic polysulfone resin, and it is preferable that the solvent be substantially not contained.
In this case, in the method for producing a resin composition of the above-mentioned embodiment (which is the method for producing a resin composition, the method including mixing an epoxy resin with an aromatic polysulfone resin containing an amino group-containing aromatic polysulfone having an amino group at at least one terminal of a main chain of a polymer chain, in which the number average molecular weight of the aromatic polysulfone resin is 10,000 or less), the content of the solvent in the mixture obtained by mixing the above-mentioned epoxy resin and the above-mentioned aromatic polysulfone resin is preferably 0 to 5 parts by mass and preferably 0 to 1 part by mass with respect to a total of 100 parts by mass of the above-mentioned epoxy resin and the above-mentioned aromatic polysulfone resin, and it is preferable that the solvent be substantially not contained.
As another aspect, in the method for producing a resin composition of the above-mentioned embodiment, the content of solvent in the mixture obtained by mixing the above-mentioned epoxy resin and the above-mentioned aromatic polysulfone resin may be 0% to 5% by mass, may be 0% to 1% by mass, or may be 0% to 0.1% by mass with respect to the total mass of the above-mentioned mixture, and it is preferable that the solvent be substantially not contained.
According to the aromatic polysulfone resin of the embodiment, since the affinity of the aromatic polysulfone resin itself for the epoxy resin is enhanced by incorporating the amino group-containing aromatic polysulfone, the use amount of the solvent required for homogeneously dissolving, compatibilizing, or dispersing the aromatic polysulfone resin in the epoxy resin can be reduced.
In the method for producing a resin composition of the embodiment, if desired, the mixture obtained by mixing the epoxy resin and the aromatic polysulfone resin may be heated from the viewpoint of improving the efficiency of dissolving the aromatic polysulfone resin in the epoxy resin.
As the method for producing a resin composition of one embodiment, a method for producing a resin composition is provided, the method including

heating a mixture obtained by mixing an epoxy resin with an aromatic polysulfone resin containing an amino group-containing aromatic polysulfone having an amino group at at least one terminal of a main chain of a polymer chain, in which the number average molecular weight of the above-mentioned aromatic polysulfone resin is 10,000 or less.

The heating temperature may be appropriately determined, but from the viewpoint of easily dissolving the aromatic polysulfone resin in the epoxy resin, as an example, it is preferable to heat such that the temperature of the above-mentioned mixture is 110°C or lower, it is more preferable to heat such that the temperature thereof is 90°C or lower, it is further preferable to heat such that the temperature thereof is 85°C or lower, and it is particularly preferable to heat such that the temperature thereof is 80°C or lower. The lower limit value of the heating temperature may be appropriately determined depending on the composition of the resin composition, but as an example, it is preferable to heat such that the temperature is 50°C to 110°C, it is more preferable to heat such that the temperature is 60°C to 90°C,

it is further preferable to heat such that the temperature is 70°C to 85°C, and it is particularly preferable to heat such that the temperature is 70°C to 80°C.

According to the aromatic polysulfone resin of the embodiment, since the affinity of the aromatic polysulfone resin itself for the epoxy resin is enhanced by incorporating the amino group-containing aromatic polysulfone, there is an advantage in that the heating temperature required for homogeneously dissolving, compatibilizing, or dispersing the aromatic polysulfone resin in the epoxy resin can be set low.

The heating time for heating the above-mentioned mixture at the above-mentioned temperature may be appropriately determined, but may be 0.5 to 10 hours, may be 1 to 5 hours, or may be 1.5 to 3 hours as an example, from the viewpoint of easily dissolving the aromatic polysulfone resin in the epoxy resin.

<<Cured object>>

A cured object of the present embodiment is obtained by curing the resin composition of the embodiment.

For example, the resin composition of the embodiment containing a curing agent is heated to, for example, higher than 150°C and equal to or lower than 200°C to be cured, and thereby a cured object having an arbitrary shape and an arbitrary form can be easily produced.

When curing the resin composition, it is preferable to cure the composition in which the epoxy resin and the aromatic polysulfone resin are homogeneously mixed by dissolving the aromatic polysulfone resin in the epoxy resin or by compatibilizing the aromatic polysulfone resin and the epoxy resin, alternatively, by dispersing the aromatic polysulfone resin in the epoxy resin.

<<Prepreg>>

A prepreg of the present embodiment contains the resin composition and reinforcing fibers.

The prepreg of the present embodiment may be obtained by impregnating the reinforcing fibers with the above-mentioned resin composition.

The reinforcing fibers are preferably at least one selected from the group consisting of carbon fibers, glass fibers, boron fibers, and aramid fibers from the viewpoint of the strength of a molded product, and are more preferably carbon fibers from the viewpoint of mechanical properties and lightweight properties. These reinforcing fibers may be in the form of woven fabrics or non-woven fabrics.

A method for producing the prepreg of the present embodiment is not particularly limited, and for example, the reinforcing fibers may be impregnated with the above-mentioned resin composition.

Examples of methods for impregnating the reinforcing fibers with the resin composition include a wet method and a hot-melt method (dry method).

The wet method is a method of impregnating the reinforcing fibers with the resin composition by immersing the reinforcing fibers in the resin composition, and thereafter pulling up the reinforcing fibers to evaporate a solvent from the reinforcing fibers using an oven or the like.

The hot-melt method is a method in which the reinforcing fibers are directly impregnated with the resin composition in which the viscosity has been reduced by heating. Furthermore, as another aspect of the hot-melt method, there is a method in which a film is produced in advance by coating a release paper or the like with the resin composition, subsequently, the above-mentioned film is superimposed from both sides or one side of the reinforcing fibers to be heated and pressurized, and thereby the reinforcing fibers are impregnated with the resin composition.

After the reinforcing fibers are impregnated with the resin composition in this manner, the resin composition with which the reinforcing fibers are impregnated is cured by being heated to 120°C to 150°C for example, and thereby the prepreg can be produced. Curing of the resin composition with which the reinforcing fibers are impregnated may be semi-curing.

In the present specification, the term "semi-curing" refers to a state in which the viscosity or hardness of the resin is increased to the extent that a certain shape can be maintained, and refers to a state in which the viscosity or hardness can be increased from the above-mentioned state to a state in which the viscosity or hardness can be further increased.

As one embodiment of the present invention, a cured object obtained by curing the above-mentioned prepreg is provided.

According to the resin composition of the embodiment, since the affinity of the aromatic polysulfone resin itself for the epoxy resin is enhanced when the aromatic polysulfone resin of the embodiment described above contains the amino group-containing aromatic polysulfone, according to the prepreg of the present embodiment, when the resin composition of the embodiment is contained, the prepreg having favorable mechanical characteristics such as toughness can be provided.

A molded product of the present embodiment may be configured by laminating a plurality of the prepregs

described above. Specifically, the molded product can be obtained by superimposing a plurality of the prepregs produced by the above-mentioned method, and performing thermosetting molding using an autoclave, a hot press, or the like.

Examples of patterns for laminating the prepregs include a method (0°) of laminating along the arrangement direction of the reinforcing fibers contained in the prepregs, and a method of laminating the prepregs while shifting them at arbitrary angle. For example, when shifting by 45°, shifting is performed in the manner of 0°/45°/90°/135°/180°/225°/270°/315°/360° (0°).

The phrase "shifting at an arbitrary angle" means changing a relative angle in the direction of the fibers contained in two layers of the prepregs laminated. The arbitrary angle can be appropriately set according to usage of the molded product.

Since the prepreg containing the resin composition of the embodiment is used in the molded product of the present embodiment, the molded product having favorable mechanical characteristics such as toughness can be provided.

The present invention has the following aspects.

[1] A resin composition containing: an epoxy resin; and an aromatic polysulfone resin containing an amino group-containing aromatic polysulfone having an amino group at at least one terminal of a main chain of a polymer chain,

in which a number average molecular weight of the above-mentioned aromatic polysulfone resin is 3,000 or more and 10,000 or less,
the above-mentioned epoxy resin is a bisphenol A type epoxy resin, and
the above-mentioned amino group-containing aromatic polysulfone is an amino group-containing aromatic polysulfone represented by General Formula (I-1).

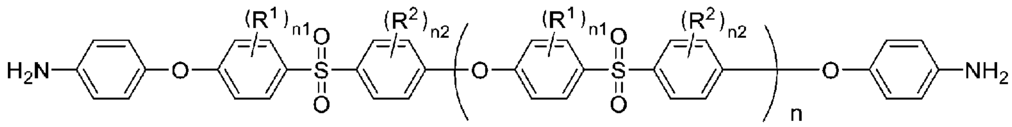

(I − 1)

[In Formula (I-1), $R^1$, $R^2$, n1, n2, and n have the same meanings as those in General Formula (1) above]

[2] The resin composition according to [1], in which n1 and n2 are 0 in Formula (I-1) above.

[3] The resin composition according to [1] or [2], in which a content of a solvent is 0 to 5 parts by mass with respect to a total of 100 parts by mass of the above-mentioned epoxy resin and the above-mentioned aromatic polysulfone resin.

[4] The resin composition according to any one of [1] to [3], in which a content of the above-mentioned aromatic polysulfone resin is 1 to 30 parts by mass with respect to a total of 100 parts by mass of the above-mentioned epoxy resin and the above-mentioned aromatic polysulfone resin.

[5] The resin composition according to any one of [1] to [4], in which the above-mentioned amino group-containing aromatic polysulfone is contained in a proportion of 80% by mass or more and 100% by mass or less with respect to a total mass of the above-mentioned aromatic polysulfone resin.

[6] The resin composition according to any one of [1] to [5], in which, with respect to a total mass (100% by mass) of the above-mentioned resin composition,

30% to 99% by mass of the epoxy resin is contained,
0.5% to 30% by mass of the aromatic polysulfone resin is contained, and
0% to 5% by mass of a solvent is contained.

[7] The resin composition according to any one of [1] to [6], further containing a curing agent.

[8] The resin composition according to [7], in which, with respect to a total mass (100% by mass) of the above-mentioned resin composition,

30% to 96% by mass of the epoxy resin is contained,
0.5% to 30% by mass of the aromatic polysulfone resin is contained,
1% to 60% by mass of the curing agent is contained, and
0% to 5% by mass of a solvent is contained.

[9] A cured object which is obtained by curing the above-mentioned resin composition according to [7] or [8].

[10] A prepreg containing: the above-mentioned resin composition according to [7] or [8]; and reinforcing fibers.
[11] The prepreg according to [10], in which the above-mentioned reinforcing fibers are carbon fibers.
[12] A cured object which is obtained by curing the above-mentioned prepreg according to [10] or [11].
[13] A method for producing the above-mentioned resin composition according to any one of [1] to [8], the method including mixing an epoxy resin with an aromatic polysulfone resin containing an amino group-containing aromatic polysulfone having an amino group at at least one terminal of a main chain of a polymer chain,

in which a number average molecular weight of the above-mentioned aromatic polysulfone resin is 10,000 or less, the above-mentioned epoxy resin is a bisphenol A type epoxy resin, and
the above-mentioned amino group-containing aromatic polysulfone is an amino group-containing aromatic polysulfone represented by General Formula (I-1).

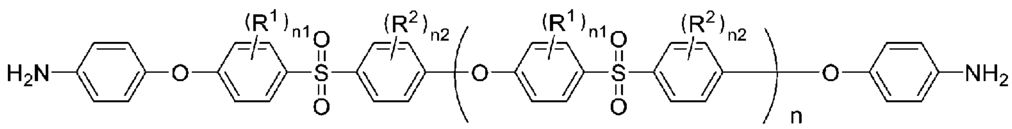

(I－1)

[In Formula (I-1), $R^1$, $R^2$, n1, n2, and n have the same meanings as those in General Formula (1) above]
[14] The method for producing the resin composition according to [13], in which a content of a solvent in the above-mentioned resin composition is 0 to 5 parts by mass with respect to a total of 100 parts by mass of the above-mentioned epoxy resin and the above-mentioned aromatic polysulfone resin.
[15] The method for producing the resin composition according to [13] or [14], in which the above-mentioned aromatic polysulfone resin is a powder in which D50 measured by a laser diffraction scattering method is 10 μm or more and 80 μm or less.
[16] The method for producing the resin composition according to any one of [13] to [15], the method further including heating a mixture obtained by mixing the above-mentioned epoxy resin and the above-mentioned aromatic polysulfone resin such that a temperature of the above-mentioned mixture is 50°C to 110°C.
[17] An aromatic polysulfone resin containing an aromatic polysulfone resin containing an amino group-containing aromatic polysulfone having an amino group at at least one terminal of a main chain of a polymer chain,

in which a number average molecular weight of the above-mentioned aromatic polysulfone resin is 3,000 or more and 10,000 or less, and
the above-mentioned amino group-containing aromatic polysulfone is an amino group-containing aromatic polysulfone represented by General Formula (I-1).

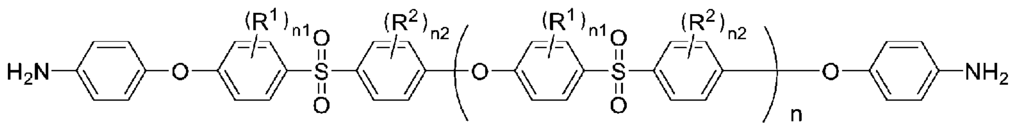

(I－1)

[In Formula (I-1), $R^1$, $R^2$, n1, n2, and n have the same meanings as those in General Formula (I) above]
[18] The aromatic polysulfone resin according to [17], in which n1 and n2 are 0 in Formula (I-1) above.
[19] The aromatic polysulfone resin according to [17] or [18], in which the aromatic polysulfone resin is a powder.
[20] The aromatic polysulfone resin according to [19], in which the aromatic polysulfone resin is a powder in which D50 measured by a laser diffraction scattering method is 10 μm or more and 80 μm or less.

[Examples]

Next, the present invention will be described in more detail with reference to examples, but the present invention is not limited to the following examples.

<Calculation of measurement of Mn of aromatic polysulfone resin>

The number average absolute molecular weight (Mn) of the aromatic polysulfone resin was obtained by GPC

measurement. Mn was measured twice in all examples to obtain the average value thereof.

[Measurement condition]

Sample: 0.002 g of aromatic polysulfone was blended in 1 mL of an N,N-dimethylformamide solution containing 10 mM lithium bromide.

Sample injection volume: 100 μL
Column (stationary phase): two "TSKgel GMHHR-H" columns (7.8 mmφ × 300 mm) manufactured by TOSOH CORPORATION were connected in series.
Column temperature: 40°C
Eluent (mobile phase): N,N-dimethylformamide containing 10 mM lithium bromide
Eluent flow rate: 0.8 mL/min
Detector: a refractive index detector (RI) + a multi-angle light scattering (MALS) photometer
Standard reagent: polystyrene

Molecular weight calculation method: absolute molecular weight was calculated from the multi-angle light scattering (MALS) photometer.

<Measurement of particle size of aromatic polysulfone fine particles>

The cumulative volume particle size of the powder of the aromatic polysulfone resin was measured by a laser diffraction scattering method. First, about 100 mg of aromatic polyester particles was dispersed in water. Subsequently, the particle size distribution of the aromatic polyester particles in the obtained dispersion liquid was obtained using a laser diffraction/scattering-type particle size distribution analyzer ("LA-950" manufactured by HORIBA, Ltd.). The D50 (μm) was calculated by obtaining a particle size at a cumulative percentage of 50% from a small size side based on the obtained cumulative volume distribution diagram of the particle size distribution of the aromatic polyester particles.

<Quantitative analysis of N-methyl-2-pyrrolidone in cured object>

The cured object was milled such that the short side was 0.5 mm or less, and a known amount of the milled cured object and a known amount of methanol were mixed at room temperature for 4 hours or longer. Thereafter, the concentration of N-methyl-2-pyrrolidone in methanol was calculated from the area ratio of gas chromatography. Subsequently, the content of N-methyl-2-pyrrolidone in the cured object was calculated from the amounts of this cured object and methanol.

<<Production Example 1>>

3.57 parts by mass of potassium carbonate, 5.13 parts by mass of bis(4-chlorophenyl)sulfone, and 120 parts by mass of N-methyl-2-pyrrolidone were mixed in a polymerization tank equipped with a stirrer, a nitrogen introduction tube, a thermometer, and a condenser with a receiver attached to the tip end. After raising the temperature to 100°C, 120 parts by mass of polyethersulfone (SUMIKAEXCEL PES3600P, manufactured by Sumitomo Chemical Co., Ltd.) was added. After the polyethersulfone was dissolved, the temperature was raised to 190°C. Thereafter, 4.53 parts by mass of 4-aminophenol and 60 parts by mass of N-methyl-2-pyrrolidone were mixed and added dropwise to cause the reaction for 10 hours by raising the temperature to 200°C. Theoretically, the molar ratio (amino compound/halogen atom) of an amino compound (4-aminophenol) to halogen atoms at the terminal of an aromatic halogenosulfone compound (total Cl atoms at the terminals of polyethersulfone and bis(4-chlorophenyl)sulfone) is 0.8.

Subsequently, the obtained reaction mixed solution was diluted with NMP and cooled to room temperature to precipitate unreacted potassium carbonate and by-produced potassium chloride. The reaction mixed solution after the above-mentioned precipitation operation was added dropwise into water to precipitate aromatic polysulfone and remove unnecessary NMP by filtration. Thereby, the precipitate was obtained. The obtained precipitate was carefully washed repeatedly with water and dried by heating at 150°C to obtain an amino group-containing aromatic polysulfone having an amino group at at least one terminal of the main chain. The number average absolute molecular weight of the obtained amino group-containing aromatic polysulfone was 6,600. Furthermore, milling with an impact mill and classifying were performed to obtain amino group-containing aromatic polysulfone fine particles (D50 value: 43 μm) of Production Example 1.

<<Production Example 2»

3.00 parts by mass of bis(4-hydroxyphenyl)sulfone, 3.31 parts by mass of bis(4-dichlorophenyl)sulfone, and 5.60 of diphenyl sulfone were put in a polymerization tank equipped with a stirrer, a nitrogen introduction tube, a thermometer, and a condenser with a receiver attached to the tip end, and the temperature was raised to 180°C while circulating nitrogen gas in the system. After adding 1.60 parts by mass of potassium carbonate to the obtained solution, the temperature was gradually raised to 290°C to further cause the reaction at 290°C for 3 hours. The obtained reaction solution was cooled to room temperature and solidified and finely milled. Thereafter, washing with warm water and washing with a mixed solvent of acetone and methanol were performed several times. Subsequently, drying was performed at 150°C to obtain a hydroxyl group-containing aromatic polysulfone having a hydroxyl group at at least one terminal of the main chain. The number average absolute molecular weight of the obtained hydroxyl group-containing aromatic polysulfone was 10,600. Furthermore, milling with an impact mill and classifying were performed to obtain hydroxyl group-containing aromatic polysulfone fine particles (D50 value: 41 μm).

<<Production Example 3»

1.22 parts by mass of 4-aminophenol, 1.24 parts by mass of potassium carbonate, and 180 parts by mass of N-methyl-2-pyrrolidone were mixed in a polymerization tank equipped with a stirrer, a nitrogen introduction tube, a thermometer, and a condenser with a receiver attached to the tip end. After raising the temperature to 100°C, 120 parts by mass of polyethersulfone (SUMIKAEXCEL PES3600P, manufactured by Sumitomo Chemical Co., Ltd.) was added. After the polyethersulfone was dissolved, heating was performed to 200°C to cause the reaction for 10 hours. Theoretically, the molar ratio (amino compound/halogen atom) of an amino compound (4-aminophenol) to halogen atoms at the terminal of an aromatic halogenosulfone compound (Cl atoms at the terminal of polyethersulfone) is 0.7.

Subsequently, the obtained reaction mixed solution was diluted with NMP and cooled to room temperature to precipitate unreacted potassium carbonate and by-produced potassium chloride. The reaction mixed solution after the above-mentioned precipitation operation was added dropwise into water to precipitate aromatic polysulfone and remove unnecessary NMP by filtration. Thereby, the precipitate was obtained. The obtained precipitate was carefully washed repeatedly with water and dried by heating at 150°C to obtain an amino group-containing aromatic polysulfone having an amino group at at least one terminal of the main chain. The number average absolute molecular weight of the obtained amino group-containing aromatic polysulfone was 13,400. Furthermore, milling with an impact mill and classifying were performed to obtain amino group-containing aromatic polysulfone fine particles (D50 value: 40 μm) of Production Example 3.

<<Production Example 4»

2.55 parts by mass of potassium carbonate, 3.27 parts by mass of bis(4-chlorophenyl)sulfone, and 120 parts by mass of N-methyl-2-pyrrolidone were mixed in a polymerization tank equipped with a stirrer, a nitrogen introduction tube, a thermometer, and a condenser with a receiver attached to the tip end. After raising the temperature to 100°C, 120 parts by mass of polyethersulfone (SUMIKAEXCEL PES3600P, manufactured by Sumitomo Chemical Co., Ltd.) was added. After the polyethersulfone was dissolved, the temperature was raised to 190°C. Thereafter, 3.39 parts by mass of 4-aminophenol and 60 parts by mass of N-methyl-2-pyrrolidone were mixed and added dropwise to cause the reaction for 10 hours by raising the temperature to 200°C. Theoretically, the molar ratio (amino compound/halogen atom) of an amino compound (4-aminophenol) to halogen atoms at the terminal of an aromatic halogenosulfone compound (total Cl atoms at the terminals of polyethersulfone and bis(4-chlorophenyl)sulfone) is 0.8.

Subsequently, the obtained reaction mixed solution was diluted with NMP and cooled to room temperature to precipitate unreacted potassium carbonate and by-produced potassium chloride. The reaction mixed solution after the above-mentioned precipitation operation was added dropwise into water to precipitate aromatic polysulfone and remove unnecessary NMP by filtration. Thereby, the precipitate was obtained. The obtained precipitate was carefully washed repeatedly with water and dried by heating at 150°C to obtain an amino group-containing aromatic polysulfone having an amino group at at least one terminal of the main chain. The number average absolute molecular weight of the obtained amino group-containing aromatic polysulfone was 6,600. Furthermore, milling with an impact mill and classifying were performed to obtain amino group-containing aromatic polysulfone fine particles (D50 value: 28 μm) of Production Example 4.

<<Production Example 5»

2.28 parts by mass of potassium carbonate, 2.67 parts by mass of bis(4-chlorophenyl)sulfone, and 120 parts by mass of N-methyl-2-pyrrolidone were mixed in a polymerization tank equipped with a stirrer, a nitrogen introduction

tube, a thermometer, and a condenser with a receiver attached to the tip end. After raising the temperature to 100°C, 120 parts by mass of polyethersulfone (SUMIKAEXCEL PES3600P, manufactured by Sumitomo Chemical Co., Ltd.) was added. After the polyethersulfone was dissolved, the temperature was raised to 190°C. Thereafter, 3.02 parts by mass of 4-aminophenol and 60 parts by mass of N-methyl-2-pyrrolidone were mixed and added dropwise to cause the reaction for 10 hours by raising the temperature to 200°C. Theoretically, the molar ratio (amino compound/halogen atom) of an amino compound (4-aminophenol) to halogen atoms at the terminal of an aromatic halogenosulfone compound (total Cl atoms at the terminals of polyethersulfone and bis(4-chlorophenyl)sulfone) is 0.8.

Subsequently, the obtained reaction mixed solution was diluted with NMP and cooled to room temperature to precipitate unreacted potassium carbonate and by-produced potassium chloride. The reaction mixed solution after the above-mentioned precipitation operation was added dropwise into water to precipitate aromatic polysulfone and remove unnecessary NMP by filtration. Thereby, the precipitate was obtained. The obtained precipitate was carefully washed repeatedly with water and dried by heating at 150°C to obtain an amino group-containing aromatic polysulfone having an amino group at at least one terminal of the main chain. The number average absolute molecular weight of the obtained amino group-containing aromatic polysulfone was 6,600. Furthermore, milling with an impact mill and classifying were performed to obtain amino group-containing aromatic polysulfone fine particles (D50 value: 29 μm) of Production Example 5.

«Example 1»

A mixture obtained by putting 90 parts by mass of a difunctional bisphenol A type epoxy resin (purchased from Sigma-Aldrich Japan) and 5 parts by mass of the amino group-containing aromatic polysulfone fine particles obtained in Production Example 1 in a heating vessel was heated at 80°C for 2 hours. As a result of confirming after 2 hours, the amino group-containing aromatic polysulfone fine particles were not visually recognized in the heated mixture, and a homogeneous composition was obtained.

«Example 2»

The same operation as in Example 1 was performed except that the amount of the amino group-containing aromatic polysulfone fine particles was changed from 5 parts by mass to 10 parts by mass. The amino group-containing aromatic polysulfone fine particles were not visually recognized, and a homogeneous composition was obtained.

«Example 3»

The same operation as in Example 1 was performed except that the amount of the amino group-containing aromatic polysulfone fine particles was changed from 5 parts by mass to 20 parts by mass. Almost no amino group-containing aromatic polysulfone fine particles were visually recognized, and a substantially homogeneous composition was obtained.

«Example 4»

A mixture obtained by putting 90 parts by mass of a difunctional bisphenol A type epoxy resin (purchased from Sigma-Aldrich Japan) and 5 parts by mass of the amino group-containing aromatic polysulfone fine particles obtained in Production Example 4 in a heating vessel was heated at 90°C for 2 hours. As a result of confirming after 2 hours, the amino group-containing aromatic polysulfone fine particles were not visually recognized in the heated mixture, and a homogeneous composition was obtained.

«Example 5»

A mixture obtained by putting 90 parts by mass of a difunctional bisphenol A type epoxy resin (purchased from Sigma-Aldrich Japan) and 5 parts by mass of the amino group-containing aromatic polysulfone fine particles obtained in Production Example 5 in a heating vessel was heated at 90°C for 2 hours. As a result of confirming after 2 hours, the amino group-containing aromatic polysulfone fine particles were not visually recognized in the heated mixture, and a homogeneous composition was obtained.

<<Comparative Example 1>>

The same operation as in Example 1 was performed except that the amino group-containing aromatic polysulfone fine particles obtained in Production Example 1 were changed to the hydroxyl group-containing aromatic polysulfone

fine particles obtained in Production Example 2. In the obtained solution, the hydroxyl group-containing aromatic polysulfone fine particles were visually recognized, showing a poor state of homogenization.

Even when the heating temperature was changed from 80°C to 100°C and heating was performed for 2 hours, the hydroxyl group-containing aromatic polysulfone fine particles of the powder were visually recognized, showing a poor state of homogenization.

Even when the heating temperature was changed from 80°C to 120°C and heating was performed for 2 hours, a trace amount of the hydroxyl group-containing aromatic polysulfone fine particles was visually recognized, and gel generation was slightly recognized.

<<Comparative Example 2»

The same operation as in Example 1 was performed except that 5 parts by mass of the amino group-containing aromatic polysulfone fine particles obtained in Production Example 1 was changed to 10 parts by mass of the hydroxyl group-containing aromatic polysulfone fine particles obtained in Production Example 2. In the obtained solution, the hydroxyl group-containing aromatic polysulfone fine particles were visually recognized, showing a poor state of homogenization.

Even when the heating temperature was changed from 80°C to 100°C and heating was performed for 2 hours, the hydroxyl group-containing aromatic polysulfone fine particles were visually recognized.

Even when the heating temperature was changed from 80°C to 120°C and heating was performed for 2 hours, a trace amount of the hydroxyl group-containing aromatic polysulfone fine particles was visually recognized, and gel generation was recognized.

<<Comparative Example 3»

The same operation as in Example 1 was performed except that 5 parts by mass of the amino group-containing aromatic polysulfone fine particles obtained in Production Example 1 was changed to 10 parts by mass of the amino group-containing aromatic polysulfone fine particles obtained in Production Example 3. In the obtained solution, the amino group-containing aromatic polysulfone fine particles were visually recognized, showing a poor state of homogenization.

Even when the heating temperature was changed from 80°C to 90°C and heating was performed for 2 hours, the amino group-containing aromatic polysulfone fine particles of Production Example 3 were visually recognized.

<<Reference Example 1>>

The same operation as in Example 1 was performed except that 5 parts by mass of the amino group-containing aromatic polysulfone fine particles obtained in Production Example 1 was changed to 10 parts by mass of the hydroxyl group-containing aromatic polysulfone fine particles obtained in Production Example 2, and that a mixture in which 50 parts by mass of N-methyl-2-pyrrolidone as a solvent was further put was heated. In the obtained solution, the hydroxyl group-containing aromatic polysulfone fine particles were not visually recognized, and a homogeneous solution was obtained.

<<Comparative Example 4»

The same operation as in Reference Example 1 was performed except that the N-methyl-2-pyrrolidone was changed to 40 parts by mass. In the obtained solution, a trace amount of the hydroxyl group-containing aromatic polysulfone fine particles was visually recognized, showing a poor state of homogenization.

Table 1 shows the above-mentioned results.

[Table 1]

| | Epoxy resin | Aromatic polysulfone fine particles | | | | | Solvent | Affinity evaluation |
|---|---|---|---|---|---|---|---|---|
| | | Amino group | Amino group | Amino group | Hydroxyl group | Amino group | | |
| | | Mn 6600 | Mn 8600 | Mn 9100 | Mn 10600 | Mn 13400 | | |
| Example 1 | 90 | 5 | | | | | | Homogeneous at 80°C |

(continued)

| | Epoxy resin | Aromatic polysulfone fine particles | | | | | Solvent | Affinity evaluation |
|---|---|---|---|---|---|---|---|---|
| | | Amino group | Amino group | Amino group | Hydroxyl group | Amino group | | |
| | | Mn 6600 | Mn 8600 | Mn 9100 | Mn 10600 | Mn 13400 | | |
| Example 2 | 90 | 10 | | | | | | Homogeneous at 80°C |
| Example 3 | 90 | 20 | | | | | | Substantially homogeneous at 80°C |
| Example 4 | 90 | | 5 | | | | | Homogeneous at 90°C |
| Example 5 | 90 | | | 5 | | | | Homogeneous at 90°C |
| Comparative Example 1 | 90 | | | | 5 | | | Particles remained at 80°C to 100°C *1 |
| Comparative Example 2 | 90 | | | | 10 | | | Particles remained at 80°C to 100°C *2 |
| Comparative Example 3 | 90 | | | | | 10 | | Particles remained at 80°C to 90°C |
| Reference Example 1 | 90 | | | | 10 | | 50 | Homogeneous at 80°C |
| Comparative Example 4 | 90 | | | | 10 | | 40 | Particles remained at 80°C |
| *1: gel was slightly generated at 120°C. *2: gel was generated at 120°C | | | | | | | | |

«Example 6»

A mixture obtained by putting 90 parts by mass of a bisphenol A type epoxy resin, 10 parts by mass of the amino group-containing aromatic polysulfone fine particles obtained in Production Example 1, and 33 parts by mass of bis(4-aminophenyl)sulfone as a curing agent in a heating vessel was heated at 120°C for 2 hours. The obtained solution was cured by heating at 130°C for 1 hour, followed by heating at 140°C for 1 hour, at 150°C for 1 hour, at 160°C for 1 hour, at 170°C for 1 hour, and at 180°C for 1 hour to obtain a cured object. The cured object was uniformly transparent, and turbidity and the like were not confirmed.

<<Reference Example 2»

The same operation as in Example 6 was performed to obtain a cured object except that the amino group-containing aromatic polysulfone fine particles obtained in Production Example 1 were changed to 10 parts by mass of the hydroxyl group-containing aromatic polysulfone fine particles obtained in Production Example 2, and that a mixture obtained by further putting 60 parts by mass of N-methyl-2-pyrrolidone as a solvent was heated. The cured object was uniformly transparent, and turbidity and the like were not confirmed. However, 22 ppm of N-methyl-2-pyrrolidone was confirmed to remain in the obtained cured object.

<<Comparative Example 5»

The same operation as in Example 6 was performed to obtain a cured object except that a mixture in which 10 parts by mass of N-methyl-2-pyrrolidone was put as a solvent was heated. 87 ppm of N-methyl-2-pyrrolidone was confirmed to remain in the obtained cured object.

Table 2 shows the above-mentioned results.

[Table 2]

| | Epoxy resin | Aromatic polysulfone fine particles | | | Solvent | Curing agent | Residual amount of solvent |
|---|---|---|---|---|---|---|---|
| | | Amino group | Hydroxyl group | Amino group | | | |
| | | Mn 6600 | Mn 10600 | Mn 13400 | | | |
| Example 6 | 90 | 10 | | | | 32.8 | - |
| Reference Example 2 | 90 | | 10 | | 60 | 32.8 | 22 ppm |
| Comparative Example 5 | 90 | | 10 | | 10 | 32.8 | 87 ppm |

From the results shown above, in the amino group-containing aromatic polysulfone having an amino group at at least one terminal of the main chain of the polymer chain and having the number average molecular weight of 10,000 or less, favorable affinity for epoxy resins was shown.

Each of configurations, combinations thereof, and the like in each of the embodiments are examples, and additions, omissions, replacements, and other changes of the configuration can be made within the range not departing from the scope of the present invention. Furthermore, the present invention is not limited by each of the embodiments, but is limited only by the scope of the claims.

## Claims

**1.** A resin composition comprising:

an epoxy resin; and
an aromatic polysulfone resin containing an amino group-containing aromatic polysulfone having an amino group at at least one terminal of a main chain of a polymer chain,
wherein a number average molecular weight of the aromatic polysulfone resin is 10,000 or less.

**2.** The resin composition according to Claim 1, wherein the epoxy resin includes a difunctional epoxy resin.

**3.** The resin composition according to Claim 1 or 2, wherein the epoxy resin is a bisphenol A type epoxy resin.

**4.** The resin composition according to any one of Claims 1 to 3, wherein a content of a solvent is 0 to 5 parts by mass with respect to a total of 100 parts by mass of the epoxy resin and the aromatic polysulfone resin.

**5.** The resin composition according to any one of Claims 1 to 4, wherein a content of the aromatic polysulfone resin is 1 to 30 parts by mass with respect to a total of 100 parts by mass of the epoxy resin and the aromatic polysulfone resin.

**6.** The resin composition according to any one of Claims 1 to 5, wherein the resin composition contains 60% by mass or more of the amino group-containing aromatic polysulfone with respect to a total mass of the aromatic polysulfone resin.

**7.** The resin composition according to any one of Claims 1 to 6, wherein the resin composition contains 30% to 99% by mass of the epoxy resin, contains 0.5% to 30% by mass of the aromatic polysulfone resin, and contains 0% to 5% by mass of a solvent with respect to a total mass of the resin composition.

**8.** The resin composition according to any one of Claims 1 to 7,
wherein the amino group-containing aromatic polysulfone has a structural unit represented by General Formula (A),

(A) $-Ph1-SO_2-Ph2-O-$

(where Ph1 and Ph2 are each independently a phenylene group that may have a substituent).

**9.** The resin composition according to any one of Claims 1 to 8, wherein the amino group-containing aromatic polysulfone is a compound represented by General Formula (I),

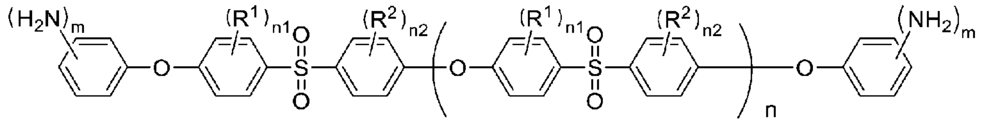

(I)

[in Formula (I),

$R^1$ and $R^2$ each independently represent an alkyl group having 1 to 10 carbon atoms, an aryl group having 6 to 20 carbon atoms, or a halogen atom,
n1 and n2 are each independently an integer of 0 to 4,
when n1 or n2 is 2 or more, a plurality of $R^1$'s and $R^2$'s may be the same as or different from each other,
n is an integer of 0 or more, and
m's are each independently an integer of 1 to 5].

**10.** The resin composition according to any one of Claims 1 to 9, further comprising a curing agent.

**11.** A cured object which is obtained by curing the resin composition according to Claim 10.

**12.** A prepreg comprising:

the resin composition according to Claim 10; and
reinforcing fibers.

**13.** The prepreg according to Claim 12, wherein the reinforcing fibers are carbon fibers.

**14.** A cured object which is obtained by curing the prepreg according to Claim 12 or 13.

**15.** A method for producing a resin composition which is a method for producing the resin composition according to any one of Claims 1 to 10, the method comprising

mixing an epoxy resin with an aromatic polysulfone resin containing an amino group-containing aromatic polysulfone having an amino group at at least one terminal of a main chain of a polymer chain,
wherein a number average molecular weight of the aromatic polysulfone resin is 10,000 or less.

**16.** The method for producing a resin composition according to Claim 15, wherein a content of a solvent in the resin composition is 0 to 5 parts by mass with respect to a total of 100 parts by mass of the epoxy resin and the aromatic polysulfone resin.

**17.** The method for producing a resin composition according to Claim 15 or 16, wherein the aromatic polysulfone resin is a powder in which D50 measured by a laser diffraction scattering method is 10 μm or more and 80 μm or less.

**18.** The method for producing a resin composition according to any one of Claims 15 to 17, the method further comprising heating a mixture obtained by mixing the epoxy resin with the aromatic polysulfone resin such that a temperature of the mixture is 50°C to 110°C.

**19.** An aromatic polysulfone resin comprising

an amino group-containing aromatic polysulfone having an amino group at at least one terminal of a main chain of a polymer chain,
wherein a number average molecular weight of the aromatic polysulfone resin is 10,000 or less.

**20.** The aromatic polysulfone resin according to Claim 19,

wherein the amino group-containing aromatic polysulfone has a structural unit represented by General Formula (A),

(A) -Ph1-$SO_2$-Ph2-O-

(where Ph1 and Ph2 are each independently a phenylene group that may have a substituent).

**21.** The aromatic polysulfone resin according to Claim 19 or 20, wherein the amino group-containing aromatic polysulfone is a compound represented by General Formula (I),

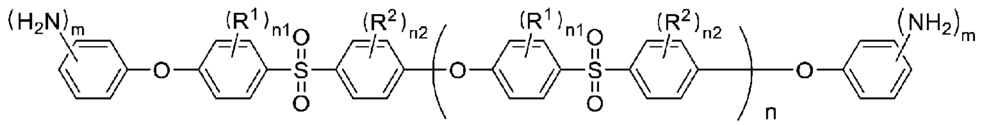

(I)

[in Formula (I),

$R^1$ and $R^2$ each independently represent an alkyl group having 1 to 10 carbon atoms, an aryl group having 6 to 20 carbon atoms, or a halogen atom,
n1 and n2 are each independently an integer of 0 to 4,
when n1 or n2 is 2 or more, a plurality of $R^1$'s and $R^2$'s may be the same as or different from each other,
n is an integer of 0 or more, and
m's are each independently an integer of 1 to 5].

**22.** The aromatic polysulfone resin according to any one of Claims 19 to 21, wherein the aromatic polysulfone resin is a powder.

**23.** The aromatic polysulfone resin according to Claim 22, wherein the aromatic polysulfone resin is a powder in which D50 measured by a laser diffraction scattering method is 10 μm or more and 80 μm or less.

**INTERNATIONAL SEARCH REPORT**

International application No.
PCT/JP2021/023185

A. CLASSIFICATION OF SUBJECT MATTER
C08G 65/48(2006.01)i; C08K 7/02(2006.01)i; C08L 81/06(2006.01)i; C08L 63/00(2006.01)i; C08J 5/24(2006.01)i; C08G 75/20(2016.01)i
FI: C08L63/00 A; C08G65/48; C08G75/20; C08J5/24 CFC; C08K7/02; C08L81/06
According to International Patent Classification (IPC) or to both national classification and IPC

B. FIELDS SEARCHED
Minimum documentation searched (classification system followed by classification symbols)
C08G65/48; C08K7/02; C08L81/06; C08L63/00; C08J5/24; C08G75/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2-58569 A (IMPERIAL CHEMICAL INDUSTRIES PLC.) 27 February 1990 (1990-02-27) claims, page 5, upper left column, lines 10-20, page 7, upper left column, line 1 to lower right column, line 16, examples | 1-23 |
| X | JP 2019-19219 A (SUMITOMO CHEMICAL CO., LTD.) 07 February 2019 (2019-02-07) claims, paragraphs [0002], [0027], [0038], examples, comparative examples | 1-23 |
| A | JP 2018-168315 A (SUMITOMO CHEMICAL CO., LTD.) 01 November 2018 (2018-11-01) | 1-23 |
| A | JP 2019-218487 A (SUMITOMO CHEMICAL CO., LTD.) 26 December 2019 (2019-12-26) | 1-23 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 August 2021 (10.08.2021) | 17 August 2021 (17.08.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/023185

| Patent Documents referred in the Report | Publication Date | Patent Family | Publication Date |
|---|---|---|---|
| JP 2-58569 A | 27 Feb. 1990 | US 5434224 A claims, column 4, lines 4-14, column 6, line 20 to column 7, line 23, examples | |
| JP 2019-19219 A | 07 Feb. 2019 | US 2020/0207984 A1 claims, paragraphs [0002], [0065], [0098], examples | |
| JP 2018-168315 A | 01 Nov. 2018 | US 2020/0024451 A1 | |
| JP 2019-218487 A | 26 Dec. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020107881 A
- JP 3160475 B